(19) Europäisches Patentamt
European Patent Office
Office européen des brevets

(11) EP 4 269 635 A1

(12) EUROPEAN PATENT APPLICATION

(43) Date of publication:
01.11.2023 Bulletin 2023/44

(21) Application number: 22382410.3

(22) Date of filing: 28.04.2022

(51) International Patent Classification (IPC):
*C22B 3/10* (2006.01) *C22B 3/44* (2006.01)
*C22B 7/00* (2006.01) *C22B 11/00* (2006.01)

(52) Cooperative Patent Classification (CPC):
C22B 11/048; C22B 3/10; C22B 3/14; C22B 3/1666; C22B 3/44; C22B 7/007; C22B 7/009

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: **Fundación Tecnalia Research & Innovation**
**48160 Derio - Bizkaia (ES)**

(72) Inventors:
- **SIRIWARDANA, Amal Inoka**
  **20009 DONOSTIA-SAN SEBASTIAN (ES)**
- **UNZURRUNZAGA ITURBE, Ainhoa**
  **20009 DONOSTIA-SAN SEBASTIAN (ES)**
- **HIDALGO BETANZOS, Joaquin**
  **20009 DONOSTIA-SAN SEBASTIAN (ES)**
- **ANTOÑANZAS GONZÁLEZ, Francisco Javier**
  **20009 DONOSTIA-SAN SEBASTIAN (ES)**
- **ALDANA, Jose Luis**
  **20009 DONOSTIA-SAN SEBASTIAN (ES)**
- **DEL RÍO GAZTELURRUTIA, Carmen**
  **20009 DONOSTIA-SAN SEBASTIAN (ES)**
- **POZO ZAMORA, Guillermo Alonso**
  **20009 DONOSTIA-SAN SEBASTIAN (ES)**
- **SÁNCHEZ CUPIDO, Laura**
  **20009 DONOSTIA-SAN SEBASTIAN (ES)**
- **MARTIN UGARTE, Eider**
  **20009 DONOSTIA-SAN SEBASTIAN (ES)**

(74) Representative: **ZBM Patents - Zea, Barlocci & Markvardsen**
**Rambla Catalunya, 123**
**08008 Barcelona (ES)**

# (54) PROCESS FOR THE RECOVERY OF PLATINUM FROM SPENT PLATINUM-CONTAINING SOLID RESIDUES

(57) It relates to a process for the recovery of a platinum group metal (PGM) material comprising platinum from a waste material which comprises a spent solid residue containing platinum and optionally palladium, which comprises the steps of: a) subjecting the material to a leaching step in the presence of a suitable leaching agent, an oxidizing agent, and an acidic medium; b) when the weight ratio of palladium and platinum in the leachate obtained in the previous step is lower than about 1.1:1, adding palladium to the leachate until such ratio is equal to or higher than about 1.1:1; and c) subjecting the leachate comprising platinum and palladium to a reducing step to precipitate a platinum group metal (PGM) material comprising platinum
in metallic form from the leachate. It also relates to the use of palladium for the recovery of platinum from a leachate comprises platinum and palladium in a weight ratio equal to or higher than about 1.1:1.

EP 4 269 635 A1

## Description

### Technical Field

The present invention relates to the field of recovery of Platinum Group Metals (PGMs), in particular, to a process for recovering a PGM material comprising platinum from spent solid residues that contain PGMs such as for example spent autocatalyst, in the presence of palladium.

### Background Art

The platinum group metals (PGMs) comprise six chemical elements, which are platinum, palladium, rhodium, ruthenium, iridium, and osmium. PGMs have similar physical and chemical properties such as high melting points, high heat resistance, high corrosion resistance. PGMs tend to occur together in the same mineral deposit.

The primary use of platinum and other PGMs is for their catalytic properties. Thus, PGMs have wide application in many industrial fields such as the automotive, chemical and petroleum refining industries. For this reason, PGMs have been denoted by the European Commission as critical raw materials with their significant economic importance and potential supply risk.

The largest platinum demand lies in the automotive sector, in particular in the following three applications: autocatalysts, sensors, and spark plugs. Platinum use in autocatalysts accounts for over 95% of total automotive platinum demand. Autocatalysts or vehicle catalytic converters (VCCs) are installed in the exhaust line of the vehicle and are used for vehicular emission control causing unburned hydrocarbons, carbon monoxide and nitrogen oxide exhaust emissions undergo complete combustion forming less harmful gases carbon dioxide, nitrogen, and water vapour.

Platinum is also required as catalyst in both electrodes of Proton Exchange Membrane fuel cells (PEMFCs). PEMFCs are devices that use $H_2$ and $O_2$ as fuels and the main and unique output is water, which are considered as viable alternative to the fossil-fuel powered vehicle.

Reforming processes using platinum catalysts are also of major importance in petroleum refining since they enable the octane rating of naphthas to be greatly increased and are more economical than any other refining process for the production of high-octane gasoline.

The annual production of platinum is much smaller than that of gold or silver. Obtaining platinum and other PGMs is becoming more difficult due to its scarcity on earth and because of the high amount of energy and water used for its extraction. Consequently, PGMs are precious and quite expensive. In contrast, the concentration of PGMs in secondary sources like VCCs is much higher. Thus, recycling is an interesting way to obtain PGMs; while mitigating the supply risk and ensure the future PGM demand, recycling also reduces the environmental impact of PGMs dramatically when compared with primary sources.

Despite this urgent necessity of recycling PGMs, between 2017-2019, only 25 to 33% of the global demand for palladium, platinum and rhodium was provided by recycling.

Traditionally, the recovery of precious metals from ore or scrap including spent catalysts has been carried out by pyrometallurgical processes, more specifically smelting, since these processes are effective at upgrading the PGM content and hence reducing the levels of impurities. However, pyrometallurgical processes are high temperature processes which require large amounts of energy.

During the past two decades, alternative technologies to the pyrometallurgical processes have been evaluated with the focus on reducing the environmental impact.

The hydrometallurgical dissolution of the spent autocatalyst using aqua regia, cyanide or strong acids such as HCl, $HNO_3$ or $H_2SO_4$, usually in presence of an oxidising agent, is the dissolution process most commonly used. Among these, cyanide leaching was widely implemented for its high dissolution efficiency. However, due to the severe toxicity and energy consumption, it has been replaced with safer methods.

All in all, the achieved recovery, efficiency, and purity of the proposed alternative hydrometallurgical methods are still insufficient to compete with the results obtained from industrially employed pyrometallurgical methods.

Among the techniques reported to separate and purify PGMs from the dissolution or leach liquor irrespective of the selected upstream processes, the most employed by global refineries are solvent extraction and multi-stage precipitation techniques. In particular, solvent extraction is one of the preferred methods because of its high efficiency and selectivity. Nevertheless, effort continues to find greener and safer organic extractants and diluents without compromising the efficiency already achieved.

The PCT application WO2008155464 generally describes a method for recovering metals, from a spent catalyst composition which contains an organic contaminant and catalytically active metals on a catalyst support. In this process, the metals, cobalt, nickel, molybdenum, rhenium or precious metals, are leached from the spent catalyst composition by adding an ionic liquid, which comprises an ammonium compound and a hydrogen bond donor, which is capable of forming a hydrogen bond with the ammonium compound.

From what it is known in the art it is derived that there is still the need of finding an environmentally friendly, cost effective and efficient methods for recovering PGMs and in particular platinum, especially from spent platinum-containing solid residues, which overcome the problems of the prior art.

## Summary of Invention

The inventors have developed a two-step process for the recovery of a platinum group metal (PGM) material comprising platinum from waste materials such as spent autocatalysts containing PGMs which allows the recovery of PGMswith high recovery efficiencies, in particular, higher than about 60%, typically in form of a solid concentrating Pt together with other PGMs present in the initial material such as Pd, Rh with a purity in PGMs higher than 85%.

The process developed by the inventors comprises a leaching step and a reducing step. The inventors have found that when the leachate contains a certain amount of palladium in addition to the platinum, the amount of platinum and palladium recovered after the reducing step is significantly increased in comparison with the amount recovered when palladium is not present in the leachate or is not present in sufficient amount. This is illustrated in the examples below.

The required amount of palladium in the leachate may already be obtained by the simultaneously leaching of palladium also contained together with platinum in the spent solid residue. Alternatively, palladium in metal form may be externally added to the original spent platinum-containing solid residue, such that the sufficient amount of palladium is also leachate out. Further, it is also possible to add part or all the required palladium amount directly to the leachate after the platinum (and other PGMs if present) has been leached out. This makes the process very versatile and suitable from an industrial point of view since palladium may also be recovered after the reduction step and can be reused again if desired.

Additionally, the process of the invention has the advantage that it can be carried out under very mild conditions, in particular using deep eutectic solvents (DESs) as leaching agents, which is beneficial from an environmental point of view as they are biodegradable and can be reused and/or recycled. In addition, DES have very low vapor pressure thus minimizing the effect of corrosion caused of the gases released.

Therefore, a first aspect of the invention relates to a process for the recovery of a platinum group metal (PGM) material comprising platinum, from a waste material which comprises a spent solid residue containing platinum and optionally palladium, wherein platinum and palladium are in metal, oxide or alloy form, which comprises the steps of:

a) subjecting the waste material to a leaching step in the presence of a suitable leaching agent, an oxidizing agent and an acidic medium, whereby a leachate is obtained which comprises the platinum and optionally the palladium initially contained in the waste material in ionic form;

b) when the weight ratio of palladium and platinum in the leachate obtained in the previous step is lower than about 1.1:1, adding palladium in ionic form to the leachate until such ratio is equal to or higher than about 1.1:1; and

c) subjecting the leachate comprising platinum and palladium in a weight ratio equal to or higher than about 1.1:1 to a reducing step to precipitate a platinum group metal (PGM) material comprising platinum in metallic form from the leachate.

A second aspect of the invention relates to the use of palladium for the recovery of platinum from a leachate which comprises platinum and palladium in a weight ratio equal to or higher than about 1.1:1. If needed, Pd can be externally added to increase Pd/Pt ratio in the leachate enhancing the Pt recovery yields.

## Detailed description of the invention

All terms as used herein in this application, unless otherwise stated, shall be understood in their ordinary meaning as known in the art. Other more specific definitions for certain terms as used in the present application are as set forth below and are intended to apply throughout the description and claims.

The term "about" or "around" as used herein refers to a range of values $\pm$ 10% of a specified value. For example, the expression "about 10" or "around 10" includes $\pm$ 10% of 10, i.e. from 9 to 11.

The term "Platinum Group Metals (PGMs)" refer to the group of platinum (Pt), palladium (Pd), ruthenium (Ru), rhodium (Rh), iridium (Ir) and osmium (Os).

For the purposes of the invention, the terms "metallic" and "metal" are used interchangeably and refer to a substance with the properties of a metal, i.e, a material that, when freshly prepared, polished, or fractured, shows a lustrous appearance, and conducts electricity and heat relatively well. The term "oxide form" as used herein encompasses any oxide of a metal. For example, platinum in oxide form may be PtO or $PtO_2$, and palladium in oxide form may be PdO or $PdO_2$. The term "alloy' is used herein to refer to a substance having metallic properties and being composed by two or more chemical elements of which at least one is a metal. The percentage of one specific metal in the alloy may be determined by standard procedures such as for example wet chemical analysis digestion of the sample followed by

inductively coupled plasma (ICP) emission spectroscopy. Non-limiting examples of platinum alloys include platinum alloyed with rhodium, germanium, palladium, tin, indium, gallium, rhenium, lead, copper, gold, and the like. Non-limiting examples of palladium alloys include palladium alloyed with platinum, gold, tin, zinc, lead, nickel, rhodium, silver, and the like.

For the purposes of the invention, the expression "leaching a metal" is to be understood as the dissolving process by which the metal, for example platinum, is extracted from a solid starting product, typically a spent catalyst, into a liquid, in particular the specific leaching agent used for the extraction. The term "leaching" is also referred herein to as "extraction". Both terms are used undistinguishably.

The term "leachate" as used herein refers to the liquid that contains the extracted or leached out metal initially contained in the solid starting product, and the term "leaching agent" refers to any chemical medium that is capable of leaching out one or more metals, in particular platinum, from the solid starting product.

The term "Deep eutectic solvent" or "DES" refers to a solvent system formed from a eutectic mixture of Lewis or Brønsted acids and bases which can contain a variety of anionic and/or cationic species. The melting point of a DES is much lower than either of the individual components when mixed in a certain ratio. Deep eutectic solvents have wide liquid range and low vapor pressure. DESs are non-reactive with water, non-flammable, and relatively low cost. Besides, many of them are biocompatible and biodegradable.

As used herein, the term "room temperature" means a temperature from 15 °C to 35 °C, particularly from 20 °C to 25 °C.

As used herein, the term "wt.%" (percentage by weight) of a component refers to the amount of the single component relative to the total weight of the composition or, if specifically mentioned, of another component.

For the purposes of the present invention, when palladium or platinum are not in metallic form but form part of other compounds (e.g. they are present in the form of oxides or salts) the amounts of palladium or platinum indicated herein refer only to the amounts of metals in these compounds as determined for example by inductive coupled plasma optical emission spectroscopy.

The term $(C_1\text{-}C_n)$alkyl as used herein refers to a saturated branched or linear hydrocarbon chain which contains from 1 to n carbon atoms and only single bonds. Non limiting examples of alkyl groups include methyl, ethyl, propyl, butyl, isopropyl, 2-methylpropyl, pentyl, hexyl, octyl, decyl, and the like. The alkyl groups may be substituted as indicated herein.

The term "halogen" as used herein means fluorine, chlorine, bromine, and iodine.

As mentioned above the present invention relates to a process for the recovery of a platinum group metal (PGM) material comprising platinum from waste materials which comprise spent solid residues containing platinum and optionally palladium, wherein platinum and palladium are in metal, oxide or alloy form.

According to one embodiment, optionally in combination with one or more features of the various embodiments described above or below, the platinum group metal (PGM) material comprises platinum and one or more of palladium, ruthenium, rhodium, iridium, and osmium.

The spent platinum-containing solid residues, also referred herein to as "spent solid residues", may be typically end-of-life products. For the purposes of the invention, the term "end-of-life" (EOL) product refers to a product containing platinum in metallic or alloy form that has reached the end of its useful life. Examples of such EOLs which can be used in the process of the present invention include spent catalysts, in particular spent catalysts for purification of gases from diesel and fuel powered engines (autocatalyst), spent petroleum refining catalysts, spent Proton Exchange Membrane fuel cells (PEMFC), and spent catalysts used in the chemical industry.

The terms "autocatalyst", "car catalyst", "automobile/automotive catalyst", "automobile/ automotive catalytic converter", "vehicle catalytic converter (VCC)" or simply "converter", are used herein interchangeably.

Commercial automotive catalysts are divided into catalytic converters having a ceramic substrate (around 90% of the automotive catalysts), and converters having a metallic substrate (around 10%). The ceramic or metallic material is normally coated by an alumina layer and is enriched with PGMs, typically platinum, palladium and rhodium. Catalytic converters having a ceramic substrate are generally composed of a support of cordierite (magnesium aluminosilicate) that is shaped through extrusion into a monolith block with a honeycomb structure. Spent converters may be obtained from the scrap yards or car service workshops.

The starting material which is used in the process of the invention, also referred herein to as "waste material", comprises a spent solid residue comprising platinum in metal, oxide or alloy form, particularly platinum in metal or oxide form.

In one embodiment, optionally in combination with one or more features of the various embodiments described above or below, the spent platinum-containing solid residue is selected from the group consisting of a spent autocatalyst, a spent petroleum refining catalyst, a spent Proton Exchange Membrane fuel cell (PEMFC), and a spent catalyst used in the chemical industry. More particularly, the spent platinum-containing solid residue is a spent autocatalyst.

Typically, the amount of platinum in the waste material is at least about 3 mg, about 10 mg, 20 mg, about 30 mg, about 40 mg, about 50 mg, about 60 mg, about 70 mg, about 80 mg, about 90 mg, or about 100 mg per Kg of

material. According to one embodiment, optionally in combination with one or more features of the various embodiments described above or below, the amount of platinum in the waste material is from 3-10000 mg, more particularly from 50-8000 mg or 150-7000 mg, per Kg of waste material.

According to one embodiment, the spent platinum-containing solid residue further comprises one or more other PGMs selected from the group consisting of palladium, ruthenium, rhodium, iridium, and osmium. More particularly, the spent platinum-containing solid residue comprises platinum, palladium, and rhodium. The spent platinum-containing solid residue may also contain other metals such as lanthanum (La), Cerium (Ce), Aluminium (Al), Iron (Fe) or lead (Pb).

The waste material may thus also comprise palladium in metal, oxide or alloy form, particularly palladium in metal or oxide form, which is also leached out in the first step of the process along with platinum. This palladium may be present in the spent platinum-containing solid residue in metal, oxide or alloy form as it is typically in the case of the autocatalysts, or alternatively may be externally added to the spent platinum-containing solid residue in metal, oxide or alloy form.

Thus, according to one embodiment, optionally in combination with one or more features of the various embodiments described above or below, the waste material comprises a spent platinum-containing solid residue that further comprises palladium in metal, oxide or alloy form, in the absence of any externally added palladium. More particularly, the waste material consists of a spent platinum-containing solid residue that further comprises palladium in metal, oxide or alloy form, particularly in metal or oxide form.

In another embodiment, optionally in combination with one or more features of the various embodiments described above or below, the waste material comprises i) a spent platinum-containing solid residue wherein palladium is absent, and ii) externally added palladium in metal, oxide or alloy form, particularly in metal or oxide form. More particularly, the waste material consists of i) a spent platinum-containing solid residue wherein palladium is absent, and ii) externally added palladium in metal, oxide or alloy form, particularly in metal or oxide form.

In another embodiment, optionally in combination with one or more features of the various embodiments described above or below, the waste material comprises i) a spent platinum-containing solid residue that further comprises palladium in metal, oxide or alloy form, particularly in metal or oxide form, and ii) externally added palladium in metal, oxide or alloy form, particularly in metal or oxide form. More particularly, the waste material consists of i) a spent platinum-containing solid residue that further comprises palladium in metal, oxide or alloy form, particularly in metal or oxide form, and ii) externally added palladium in metal, oxide or alloy form, particularly in metal or oxide form.

In another embodiment, optionally in combination with one or more features of the various embodiments described above or below, the waste material comprises a spent platinum-containing solid residue wherein palladium is absent, in the absence of any externally added palladium. More particularly, the waste material consists of a spent platinum-containing solid residue wherein palladium is absent.

According to one embodiment, optionally in combination with one or more features of the various embodiments described above or below, when palladium is present in the waste material either because it is present in the spent platinum-containing solid residue and/or because it is externally added to the material, the amount of palladium in the waste material is about 7 mg, more particularly at least about 10 mg, 20 mg, about 30 mg, about 40 mg, about 50 mg, about 60 mg, about 70 mg, about 80 mg, about 90 mg, or about 100 mg, per Kg of material.

In another embodiment, optionally in combination with one or more features of the various embodiments described above or below, the amount of palladium in the waste material is at least from 7-10000 mg, more particularly from 20-10000 mg, per Kg of material, wherein the amounts refer to palladium in metallic or oxide form.

In another embodiment, optionally in combination with one or more features of the various embodiments described above or below, the amount of platinum in the waste material is at least about 3 mg, about 10 mg, 20 mg, about 30 mg, about 40 mg, about 50 mg, about 60 mg, about 70 mg, about 80 mg, about 90 mg, or about 100 mg per Kg of material, and the amount of palladium in the waste material is about 7 mg, more particularly at least about 10 mg, 20 mg, about 30 mg, about 40 mg, about 50 mg, about 60 mg, about 70 mg, about 80 mg, about 90 mg, or about 100 mg, per Kg of material.

As mentioned above, the required amount of palladium in the leachate may already be obtained by the simultaneously leaching of palladium also contained together with platinum in the waste material. Thus, according to another embodiment, the amount of palladium in the starting material spent platinum-containing solid residue is such that after the leaching step a) the weight ratio of palladium and platinum in the leachate is equal to or higher than about 1.1:1, more particularly is equal to or higher than about 1.2:1, about 1.3:1, about 1.4:1, about 1.5:1, about 1.6:1, about 1.7:1, about 1.8:1, about 1.9:1, about 2:1, about 2.1:1, about 2.2:1, about 2.3:1, about 2.4:1, about 2.5:1, about 2.6:1, about 2.7:1, about 2.8:1, about 2.9:1, about 3:1, about 4:1, about 5:1, about 6:1, about 7:1, about 8:1, about 9:1, about 10:1, about 15:1, about 20:1, about 25:1, about 30:1, about 40:1, about 50:1, about 60:1, about 70:1, about 80:1, about 90:1, about 100:1, about 110:1, about 120:1, about 130:1, about 140:1, or about 150:1, more particularly is equal to or higher than about 2:1.

The efficiency of the process of the invention may be further enhanced by applying the leaching step to a homogeneous spent platinum-containing solid residue, in particular in powder form. Thus, if desired, the spent platinum-containing solid residue can be conveniently pre-treated by methods are well-known in the art which include for example pre-treatments aimed at size reducing, homogenizing, surface cleaning and the like.

In one embodiment, optionally in combination with one or more features of the various embodiments described above or below, the spent platinum-containing solid residue is in form of powder obtained by milling and sieving using a 2 mm mesh.

Conventional physical pre-treatment steps typically include in the first place dismantling of the converters to separate the precious-metal-bearing carrier material from the non-precious-metal-bearing steel casing, by de-canning in the case of ceramic converters, or shredding in the case of metallic converters. This step is generally followed by comminution steps such as crushing or milling. Further advanced pre-treatments, such as oxidative/reducing steps or calcination may be also applied. For example, if the spent platinum-containing solid residue contains platinum or palladium in oxide form (e.g. $PtO_2$, PtO, PdO, $PdO_2$), a pre-reduction step for example with formic acid could be beneficial.

The process of the invention comprises a step a) of subjecting the spent platinum-containing solid residue to a leaching step in the presence of a suitable leaching agent, an oxidizing agent, and an acidic medium, whereby a leachate is obtained which comprises the platinum and optionally the palladium initially contained in the platinum-containing material in ionic form.

Examples of suitable leaching agents that may be used include, without limitation, inorganic acids and its mixtures such as HCl and aqua regia (mixture of $HNO_3$ and HCl), organic acids such as oxalic and lactic acid, inorganic bases such as NaOH, organic bases such as $NH_4OH$, metal salts such as NaCl, halogens, cyanides and deep eutectic solvents.

Examples of oxidizing agents that may be used include, without limitation, hydrogen peroxide ($H_2O_2$), $NaNO_3$, $I_2$, $KHSO_5$, Fenton's reagent (mixture of $H_2O_2$ with iron typically in form of $FeSO_4$).

Additionally, the leaching step is performed in an acidic medium (pH<7). The acidic medium can be obtained by the addition of an acid, particularly an inorganic acid selected from sulfuric acid ($H_2SO_4$), hydrochloric acid (HCl), and nitric acid ($HNO_3$), more particularly of HCl e.g. 37%wt or $HNO_3$ e.g. 6 M.

According to one embodiment, optionally in combination with one or more features of the various embodiments described above or below, the oxidizing agent is selected from the group consisting of hydrogen peroxide, $NaNO_3$, $I_2$, $KHSO_5$, Fenton's reagent, and mixtures thereof, more particularly the oxidizing agent is hydrogen peroxide, for example e.g. 35%wt hydrogen peroxide.

In another embodiment, optionally in combination with one or more features of the various embodiments described above or below, the acidic medium is obtained by the addition of an acid selected from the group consisting of sulfuric acid, hydrochloric acid, nitric acid, and mixtures thereof, more particularly the acidic medium is hydrochloric acid.

In another embodiment, optionally in combination with one or more features of the various embodiments described above or below, the leaching agent is selected from inorganic acids, organic acids, inorganic bases, organic bases, metal salts, halogens, cyanides, and deep eutectic solvents, more particularly the leaching agent is a deep eutectic solvent as defined herein.

In another embodiment, optionally in combination with one or more features of the various embodiments described above or below, the weight ratio of the leaching agent and the waste material is from 3:1 to 50:1, more particularly from 4:1 to 30:1, from 5:1 to 20:1, or from 6:1 to 10:1, and even more particularly is about 8:1.

In another embodiment, optionally in combination with one or more features of the various embodiments described above or below, the weight ratio of the oxidizing agent and the waste material is from 0.1:1 to 10:1, more particularly from 0.15:1 to 7:1, from 0.2:1 to 5:1, or from 0.3:1 to 2:1, and even more particularly is about 0.75:1.

In another embodiment, optionally in combination with one or more features of the various embodiments described above or below, the weight ratio of the acid providing the acidic medium and the waste material is from 0.1:1 to 10:1, from 0.15:1 to 7:1, from 0.2:1 to 5:1, or more particularly from 0.3:1 to 2:1, and even more particularly is about 0.5:1.

When the leaching agent is a deep eutectic solvent, the leaching step may be carried out at a temperature from 40 to 130 °C, more particularly from 60 to 120 °C, and for a period from 0.25 to 6 h, more particularly from 1 to 4 h.

In one embodiment, optionally in combination with one or more features of the various embodiments described above or below, the leaching step a) is carried out in the presence of a leaching agent which is a deep eutectic solvent, particularly at a weight ratio from 3:1 to 50:1 with respect to the waste material, an oxidizing agent, particularly at a weight ratio from 0.1:1 to 10:1 with respect to the waste material, and an acidic medium, and comprises the steps of i) heating the deep eutectic solvent at a temperature from 40 to 130 °C, more particularly from 60 to 120 °C; ii) adding an inorganic acid to the deep eutectic solvent and heating the mixture at a temperature from 40 to 130 °C, more particularly from 60 to 120 °C; and iii) adding the oxidizing agent and stirring for a period from 0.25 to 6 h, more particularly from 1 to 4 hours.

Deep Eutectic Solvents

Deep eutectic solvents consist of a mixture of a hydrogen bond acceptor (HBA) compound (A) as defined

above, and a hydrogen bond donor (HBD) compound (B).

As used herein, the term "hydrogen bond acceptor" refers to a chemical structure having at least one electronegative atom, such as an oxygen atom or a nitrogen atom, capable of interacting with an electropositive hydrogen atom through a hydrogen bond. As used herein, the term "hydrogen bond donor" refers to a chemical structure having at least one electropositive hydrogen atom capable of interacting with an electronegative atom through a hydrogen bond.

In one embodiment, optionally in combination with one or more features of the various embodiments described above or below, the hydrogen bond acceptor compound (A) is selected from the group consisting of:

a) a salt of the formula $Cat^+X^-$ (I), wherein $Cat^+$ is a cation selected from the group consisting of any ammonium, imidazolium, and phosphonium, and $X^-$ is a Lewis base;
b) betaine or a salt thereof; and
c) carnitine or a salt thereof.

In one more particular embodiment, optionally in combination with one or more features of the various embodiments described above or below, the hydrogen bond acceptor compound (A) is a salt of the formula $Cat^+X^-$ (I), wherein $Cat^+$ is a cation selected from the group consisting of ammonium, imidazolium, and phosphonium, and $X^-$ is a Lewis base.

In one more particular embodiment, optionally in combination with one or more features of the various embodiments described above or below, in the cation $Cat^+$ the quaternary ammonium cation has the formula a), the imidazolium cation has the formula b), and the phosphonium cation has the formula c), wherein the chemical formulas a), b) and c) are shown below:

$NR_4^+$ 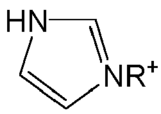 $PR_4^+$

a) b) c)

wherein each of the R substituents may be the same or different and is selected from the group consisting of H, phenyl optionally substituted with halogen, and $(C_1\text{-}C_{18})$alkyl optionally substituted with one or more substituents selected from the group consisting of phenyl optionally substituted with halogen, halogen, OH, $-OCO(C_1\text{-}C_6)$alkyl, -OCOY, $-COO(C_1\text{-}C_6)$alkyl, and COOH, wherein Y is halogen.

Non-limiting examples of ammonium cations include (2-hydroxyethyl)trimethylammonium (choline, Ch), ethyltrimethylammonium, ethylammonium, triethylammonium, triethylmethylammonium, benzyltriethylammonium, methylammonium, dimethylammonium, (2-chloroethyl)trimethylammonium, (2-fluoroethyl)trimethylammonium, (2-bromoethyl)trimethylammonium, ethyl(2-hydroxyethyl)dimethylammonium, benzyl(2-hydroxyethyl)dimethylammonium, bis(2-hydroxyethyl)dimethylammonium, benzyl-bis(2-hydroxyethyl)methylammonium, (2-chlorocarbonyloxyethyl)trimethylammonium, tetrabutylammonium, tetrapropylammonium, (2-hydroxyethyl)diethylammonium, benzyltrimethylammonium, benzyltriethylammonium, benzyl(2-hydroxyethyl)dimethylammonium, diethylammonium, and (2-acetyloxyethyl)trimethylammonium.

Non-limiting examples of imidazolium cations include 1-ethyl-3-methylimidazolium, 1-butyl-3-methylimidazolium, and 1-hexyl-3-methylimidazolium.

Non-limiting examples of phosphonium cations include methyltriphenylphosphonium, benzyltriphenylphosphonium, P-carboxymethyl-tributylphosphonium, trihexyl(tetradecyl)-phosphonium, tributyl(tetradecyl)phosphonium, tributyl(octyl)phosphonium, and tetrabutylphosphonium.

In one particular embodiment, optionally in combination with one or more features of the various embodiments described above or below, the cation $Cat^+$ in the salt of the formula (I) is selected from the group consisting of a quaternary ammonium cation of formula a) and a phosphonium cation of formula c) as defined above; even more particularly the cation $Cat^+$ is a quaternary ammonium cation of formula a).

In another embodiment, optionally in combination with one or more features of the various embodiments described above or below, in the formulas a), b) and c) above, more particularly in the formulas a) and c), and even more particularly in the formula a), each R is independently selected from H, benzyl and $(C_1\text{-}C_{18})$alkyl(more particularly $(C_1\text{-}C_{14})$alkyl, and even more particularly $(C_1\text{-}C_{12})$alkyl) optionally substituted as defined above; even more particularly, each R is independently selected from H, benzyl, and $(C_1\text{-}C_{18})$alkyl (more particularly $(C_1\text{-}C_{14})$alkyl, and even more particularly $(C_1\text{-}C_{12})$alkyl) optionally substituted with one or more substituents selected from the group consisting of phenyl, halogen, and OH.

In another embodiment, optionally in combination with one or more features of the various embodiments described above or below, in the formulas a), b) and c) above, more particularly in the a) and c), and even more particularly

in the formula c), each R is independently selected from benzyl; phenyl optionally substituted as defined above; and ($C_1$-$C_{18}$)alkyl (more particularly ($C_1$-$C_{14}$)alkyl, and even more particularly ($C_1$-$C_{12}$)alkyl) optionally substituted as defined above.

In another embodiment, optionally in combination with one or more features of the various embodiments described above or below, in the formulas a), b) and c) above, more particularly in the formulas a) and c), and even more particularly in the formula a), at least one of the R substituents is other than H. In another particular embodiment, at least two of the R substituents are other than H.

In another embodiment, optionally in combination with one or more features of the various embodiments described above or below, the cation $Cat^+$ in the salt of the formula (I) is selected from the group consisting of ethylammonium and choline. More particularly, the cation $Cat^+$ is choline.

In the salt of the formula $Cat^+X^-$ (I), the anion $X^-$ is a Lewis base. For the purposes of the invention, the term Lewis base refers to any nucleophilic species containing an unshared pair of electrons capable of sharing with an acid. A Lewis base is therefore an electron-pair donor. Non-limiting examples of Lewis bases $X^-$ are $NO_3^-$, $F^-$, $Cl^-$, Br, $I^-$, $BF_4^-$ , $ClO_4^-$, $CN^-$, $SO_3CF_3^-$, or $COOCF_3^-$.

In one particular embodiment, optionally in combination with one or more features of the various embodiments described above or below, the anion $X^-$ in the salt of the formula (I) is selected from the group consisting of halides, in particular $Cl^-$ or Br.

In another embodiment, optionally in combination with one or more features of the various embodiments described above or below, the salt $Cat^+X^-$ of formula (I) is selected form the group consisting of choline chloride, choline nitrate, choline acetate, methylammonium chloride, dimethylammonium chloride, ethyl(2-hydroxyethyl)dimethylammonium chloride, ethylammonium chloride, triethylammonium chloride, triethylmethylammonium bromide, benzyltriethylammonium chloride, (2-chlorocarbonyloxyethyl)trimethylammonium chloride, (2-chloroethyl)trimethylammonium chloride, (2-fluoroethyl)trimethylammonium bromide, (2-bromoethyl)trimethylammonium bromide, tetrabutylammonium bromide, tetrabutylammonium chloride, tetrapropylammonium bromide, (2-hydroxyethyl)-diethylammonium chloride, benzyltrimethylammonium chloride, benzyltriethylammonium tetrafluoroborate, benzyl(2-hydroxyethyl)dimethylammonium chloride, bis(2-hydroxyethyl)dimethylammonium iodide, benzyl-bis(2-hydroxyethyl)methylammonium chloride, (2-acetyloxyethyl)trimethyl-ammonium chloride, 1-ethyl-3-methylimidazolium chloride, 1-butyl-3-methylimidazolium chloride, 1-hexyl-3-methylimidazolium chloride, benzyltriphenylphosphonium chloride, methyltriphenyl-phosphonium bromide, trihexyl(tetradecyl)phosphonium chloride, tributyl(tetradecyl)phosphonium chloride, tributyl(octyl)phosphonium chloride, and tetrabutylphosphonium chloride.

In another embodiment, optionally in combination with one or more features of the various embodiments described above or below, the hydrogen bond acceptor compound (A) is selected from betaine or a salt thereof, and carnitine or a salt thereof.

For the purposes of the invention betaine refers to N,N,N-trimethylglycine, and carnitine refers to 3-hydroxy-4-N,N,N- trimethylaminobutyrate. In one embodiment, optionally in combination with one or more features of the various embodiments described above or below, carnitine is L-carnitine.

Salts of betaine and carnitine include salts with organic acids such as fumaric acid as well as inorganic acids such as hydrochloric acid. In one embodiment, optionally in combination with one or more features of the various embodiments described above or below, the hydrogen bond acceptor compound (A) is selected from betaine, betaine hydrochloride, carnitine, and carnitine hydrochloride.

In another embodiment, optionally in combination with one or more features of the various embodiments described above or below, the hydrogen bond acceptor compound (A) is selected from the group consisting of carnitine or a salt thereof, betaine or a salt thereof, choline chloride, and ethylammonium chloride. More particularly, the hydrogen bond acceptor compound (A) is choline chloride.

In the present invention ($C_1$-$C_{12}$)alcohols, ($C_1$-$C_{12}$)aldehydes, ($C_1$-$C_{18}$)carboxylic acids, ($C_1$-$C_6$)ureas, ($C_1$-$C_{12}$)amides, ($C_1$-$C_{12}$)nitrogenated compounds, ($C_2$-$C_{12}$)amino acids and ($C_1$-$C_{12}$)sugars may be used as hydrogen bond donor (HBD) compounds (B).

Non-limiting examples of HBDs include ($C_1$-$C_6$)ureas such as urea, 1-(trifluoromethyl)urea, 1-methylurea, allylurea, 1,3-dimethylurea, 1,1-dimethylurea, thiourea, tetramethylurea; ($C_1$-$C_{12}$)amides such as N-methylacetamide, acetamide, benzamide, 2,2,2-trifluoroacetamide, salicylamide; ($C_1$-$C_{12}$)alcohols such as ethanediol, 9-anthracenemethanol, ethanol, propan-2-ol, mannitol, 8-hydroxyquinoline, methyl salicylate, and phenyl-salicylate, triethanolamine, 2-chloroethanol, 4-hydroxy-3-methoxybenzaldehyde (vanillin), p-hydroxybenzaldehyde, benzyl alcohol, phenol, p- methylphenol, o-methylphenol, m-methylphenol, p-chlorophenol, p-aminophenol, xylenol, glycerol, ethylene glycol, triethyleneglycol, 1,4-butanediol, 1,6-hexanediol; ($C_1$-$C_{12}$)aldehydes such as benzaldehyde; ($C_2$-$C_{12}$)amino acids such as glycine, alanine, lysine, phenylalanine; ($C_1$-$C_{12}$)sugars such as fructose, lactose, saccharin, glucose, xylitol, sorbitol; ($C_1$-$C_{18}$)carboxylic acids such as trifluoroacetic acid, glycolic acid, trichloroacetic acid, glyoxylic acid, benzoic acid, citric acid, mandelic acid, valeric acid, tartaric acid, glutaric acid, m-nitrobenzoic acid, p-hydroxybenzoic acid, glutamic acid, m-aminobenzoic acid, malonic acid, p-toluensulfonic acid, oxalic acid, benzoic acid, phenylacetic acid, phenylpropionic

acid, itaconic acid, levulinic acid, propane-1,2,3-tricarboxylic acid (tricarballylic acid), salicylic acid, trans-cinnamic acid, 3,5-dinitrobenzoic acid, nicotinic acid, stearic acid, hippuric acid, oleic acid, terephthalic acid, adipic acid, malic acid, succinic acidacetic acid and lactic acid; and ($C_1$-$C_{12}$)nitrogenated compounds such as aniline, imidazole, hydroxylamine hydrochloride, diaminoethane, 1,2-diaminopropane, pyridine, benzylamine, triethylamine

In one particular embodiment, optionally in combination with one or more features of the various embodiments described above or below, the hydrogen bond donor (B) is selected from ($C_1$-$C_{12}$)alcohol, ($C_1$-$C_{12}$)aldehyde, ($C_1$-$C_{18}$)carboxylic acid, ($C_1$-$C_{12}$)amide, ($C_1$-$C_{12}$)nitrogenated compound, ($C_2$-$C_{12}$)amino acid and ($C_1$-$C_{12}$)sugar, more particularly selected from ($C_1$-$C_{12}$)alcohol, ($C_1$-$C_{12}$)aldehyde, ($C_1$-$C_{18}$)carboxylic acid, and ($C_1$-$C_{12}$)amide.

In another embodiment, optionally in combination with one or more features of the various embodiments described above or below, the hydrogen bond donor (B) is a ($C_1$-$C_6$)urea. More particularly, the hydrogen bond donor is a ($C_1$-$C_6$)urea selected from the group consisting of urea, 1-(trifluoromethyl)urea, 1-methylurea, allylurea, 1,3-dimethylurea, 1,1-dimethylurea, thiourea, and tetramethylurea; even more particularly is urea.

In another particular embodiment, optionally in combination with one or more features of the various embodiments described above or below, the hydrogen bond donor (B) is a ($C_1$-$C_{18}$)carboxylic acid. More particularly, the hydrogen bond donor is a ($C_1$-$C_{18}$)carboxylic acid selected from the group consisting of trifluoroacetic acid, glycolic acid, trichloroacetic acid, glyoxylic acid, benzoic acid, citric acid, mandelic acid, valeric acid, tartaric acid, glutaric acid, m-nitrobenzoic acid, p-hydroxybenzoic acid, glutamic acid, m-aminobenzoic acid, malonic acid, p-toluensulfonic acid, oxalic acid, benzoic acid, phenylacetic acid, phenylpropionic acid, itaconic acid, levulinic acid, propane-1,2,3-tricarboxylic acid (tricarballylic acid), salicylic acid, trans-cinnamic acid, 3,5-dinitrobenzoic acid, nicotinic acid, stearic acid, hippuric acid, oleic acid, terephthalic acid, adipic acid, malic acid, succinic acid, acetic acid and lactic acid. Even more particularly, the hydrogen bond donor is a ($C_1$-$C_9$)carboxylic acid, even more particularly is glycolic acid or lactic acid.

Generally, in the deep eutectic solvent, the hydrogen bond acceptor compound (A) and the hydrogen bond donor (HBD) compound (B) are in a molar ratio of (A) to (B) from 1:10 to 10:1. In one particular embodiment, optionally in combination with one or more features of the various embodiments described above or below, the hydrogen bond acceptor compound (A) and the hydrogen bond donor (HBD) compound (B) are in a molar ratio of (A) to (B) from 1:5 to 5:1, more particularly 1:4 to 4:1, even more particularly from 1:1 to 1:5.

In a particular embodiment, optionally in combination with one or more features of the various embodiments described above or below, the hydrogen bond acceptor compound (A) and the hydrogen bond donor (HBD) compound (B) are in a molar ratio of (A) to (B) of 1:1, 1:2, 1:3, 1:4 or 1:5 more particularly 1:2.

The deep eutectic solvent used in the process of the invention may further comprise a second hydrogen bond donor (HBD) compound, thereby forming a ternary deep eutectic solvent. This component may be the same or different from the HBD defined above for the binary DES that consists of a mixture of a hydrogen bond acceptor compound (A), and a hydrogen bond donor (HBD) compound (B).

In one particular embodiment, optionally in combination with one or more features of the various embodiments described above or below, the second hydrogen bond donor of the ternary DES is a ($C_1$-$C_{18}$)carboxylic acid. More particularly, the hydrogen bond donor is a ($C_1$-$C_{18}$)carboxylic acid selected from the group consisting of trifluoroacetic acid, glycolic acid, trichloroacetic acid, glyoxylic acid, benzoic acid, citric acid, mandelic acid, valeric acid, tartaric acid, glutaric acid, m-nitrobenzoic acid, p-hydroxybenzoic acid, glutamic acid, m-aminobenzoic acid, malonic acid, p-toluensulfonic acid, oxalic acid, benzoic acid, phenylacetic acid, phenylpropionic acid, itaconic acid, levulinic acid, propane-1,2,3-tricarboxylic acid (tricarballylic acid), salicylic acid, trans-cinnamic acid, 3,5-dinitrobenzoic acid, nicotinic acid, stearic acid, hippuric acid, oleic acid, terephthalic acid, adipic acid, malic acid, succinic acid, acetic acid and lactic acid. Even more particularly, the second hydrogen bond donor of the ternary DES is a ($C_1$-$C_9$)carboxylic acid, even more particularly is citric acid or malonic acid, and even more particularly, citric acid.

In one particular embodiment, optionally in combination with one or more features of the various embodiments described above or below, the second HBD in the ternary DES is present in an amount from 1 wt% to 40 wt%, more particularly from 5 wt% to 20 wt%, even more particularly from 10 wt% to 15 wt%, with respect to the total weight of DES.

In another particular embodiment, optionally in combination with one or more features of the various embodiments described above or below, the DES used in the process of the invention is selected from the group consisting of choline chloride:oxalic acid; choline chloride:lactic acid, betaine:lactic acid, choline chloride:citric acid, choline chloride:lactic acid and citric acid, choline chloride:lactic acid and oxalic acid, choline chloride:malonic acid, choline chloride:malic acid, tetrabutylammonium chloride:lactic acid, tetrabutylammonium chloride:acetic acid, tetrabutylammonium chloride:oxalic acid, betaine:oxalic acid, choline chloride:ethylene glycol, choline chloride:glycerol, choline chloride:p-toluensulfonic acid, wherein betaine may optionally be in the form of hydrochloride salt.

In another particular embodiment, optionally in combination with one or more features of the various embodiments described above or below, the DES used in the process of the invention is selected from the group consisting of:

- choline chloride: oxalic acid in a molar ratio of 1:1, 1:1:5, 1:2 and 1:3
- 85 wt% choline chloride: citric acid in a molar ratio 1:1.4 + 15 wt% $H_2O$

- choline chloride: lactic acid in a molar ratio 1:2 and 1:10
- betaine: lactic acid in a molar ratio 1:10
- betaine: oxalic acid in a molar ratio 1:1
- 85 % choline chloride:citric acid in a molar ratio of 1:1.4 + 15 % $H_2O$
- 80 % of choline chloride:lactic acid in a molar ratio 1:2 and 20% citric acid
- 70 % of choline chloride:lactic acid in a molar ratio 1:3 and 30% citric acid
- choline chloride: lactic acid and oxalic acid in a molar ratio 1:1:1, 1:1:2, 1:2:1, 1:3:1 and 1:4:2
- choline chloride:malonic acid in a molar ratio 1:2
- choline chloride:malic acid in a molar ratio 1:1
- choline chloride: glucose: water in a molar ratio 5:2:5
- tetrabutylammonium chloride: lactic acid in a molar ratio 3:2, 3:1 and 2:1
- tetrabutylammonium chloride: acetic acid in a molar ratio 2:1, 1:1, 3:2
- tetrabutylammonium chloride:oxalic acid in a molar ratio 1:1
- choline chloride:ethylene glycol in a molar ratio 1:2
- choline chloride:glycerol in a molar ratio 1:2

DESs are usually obtained by mixing a hydrogen bond acceptor (HBA) compound (A) as defined above, in particular a quaternary ammonium salt, and a hydrogen bond donor (HBD) compound of formula (B) as defined above (e.g., alcohol, sugar or carboxylic acid) in the desired amount, preferably by heating at a suitable temperature such as a temperature from 60 to 80 °C and for a suitable period of time, for example a period from 0.5 to 4 hours.

The inventors have found that when a DES is used as a leaching agent, the DES-based leachates can be used again to leach metals from fresh autocatalyst powders increasing the concentration of the metals in the DES. This has the advantage that the amount of DES needed to recover a certain amount of Pt is reduced and further that the increased concentration of Pt in the leachate enhances the recovery of Pt in the reduction step. Thus, according to another embodiment, optionally in combination with one or more features of the various embodiments described above or below, the process for the recovery of platinum of the invention comprises subjecting the material to a leaching step in the presence of a suitable leaching agent which is a deep eutectic solvent which has been previously used for the recovery of platinum and optionally an oxidizing agent.

As mentioned above, the process for platinum recovery of the present invention further comprises a reduction step in which platinum is precipitated in metallic form and thus recovered. In order to have high recovery efficiencies it is needed that the leachate which is subjected to a reduction step comprises platinum and palladium in a weight ratio equal to or higher than about 1.1:1.

According to one embodiment, optionally in combination with one or more features of the various embodiments described above or below, step c) is carried out by subjecting a leachate to a reducing step which comprises platinum and palladium in a weight ratio equal to or higher than about 1.1:1, more particularly is equal to or higher than about 1.2:1, about 1.3:1, about 1.4:1, about 1.5:1, about 1.6:1, about 1.7:1, about 1.8:1, about 1.9:1, about 2:1, about 2.1:1, about 2.2:1, about 2.3:1, about 2.4:1, about 2.5:1, about 2.6:1, about 2.7:1, about 2.8:1, about 2.9:1, about 3:1, about 4:1, about 5:1, about 6:1, about 7:1, about 8:1, about 9:1, about 10:1, about 15:1, about 20:1, about 25:1, about 30:1, about 40:1, about 50:1, about 60:1, about 70:1, about 80:1, about 90:1, about 100:1, about 110:1, about 120:1, about 130:1, about 140:1, or about 150:1, more particularly is equal to or higher than about 2:1.

According to another embodiment, optionally in combination with one or more features of the various embodiments described above or below, the leachate used in step c) comprises at least about 7 mg, more particularly at least about 20, about 30, about 40, about 50, about 60, about 70, about 80, about 90, about 100, about 200, about 300, about 400, about 500, about 600, about 700, about 800, or about 900 mg palladium per Kg of leachate, and even more particularly the leachate used in step c) comprises about 820 mg palladium per Kg of leachate.

According to another embodiment, optionally in combination with one or more features of the various embodiments described above or below, the leachate used in step c) comprises at least about 1.4 mg, more particularly at least about 2, about 5, about 10, about 15, about 20, about 30, about 40, about 50, about 60, about 70, about 80, about 85, about 90, about 95, about 100, about 110, about 120, about 130, about 140, about 150, about 160, about 170, about 180, about 190, about 200, about 210, about 220, about 230, about 240, about 250, about 260, about 270, about 280, about 290, about 300, about 310, about 320, about 330, about 340, about 350, about 360, or about 370 mg platinum per Kg of leachate.

According to a more particular embodiment, optionally in combination with one or more features of the various embodiments described above or below, when the concentration of platinum in the leachate is lower than about 40 mg/Kg of leachate, more particularly is about 38, about 35, about 30, about 25, about 20, about 15, about 10, or about 5; the weight ratio of palladium and platinum in the leachate is equal to or higher than about 2:1, about 2.1:1, about 2.2:1, about 2.3:1, about 2.4:1, about 2.5:1, about 2.6:1, about2.7:1, about 2.8:1, about 2.9:1, about 3:1, about 4:1, about 5:1, about 6:1, about 7:1, about 8:1, about 9:1, about 10:1, about 15:1, about 17:1, about 20:1, about 25:1, about 30:1,

about 40:1, about 50:1, about 60:1, about 70:1, about 80:1, about 90:1, about 100:1, about 110:1, about 120:1, about 130:1, about 140:1, or about 150:1, more particularly is equal to or higher than about 17:1.

According to another more particular embodiment, optionally in combination with one or more features of the various embodiments described above or below, when the concentration of platinum in the leachate is equal to or higher than about 40 mg/Kg and lower than about 80 mg/Kg of leachate, more particularly is about 40, about 45, about 50, about 55, about 60, about 65, about 70, about 75, or about 78 mg/Kg; the weight ratio of palladium and platinum in the leachate is equal to or higher than about 1.8:1, about 1.9:1, about 2:1, about 2.1:1, about 2.2:1, about 2.3:1, about 2.4:1, about 2.5:1, about 2.6:1, about 2.7:1, about 2.8:1, about 2.9:1, about 3:1, about 4:1, about 5:1, about 6:1, about 7:1, about 8:1, about 9:1, about 10:1, about 15:1, about 20:1, about 25:1, about 30:1, about 40:1, about 50:1, about 60:1, about 70:1, about 80:1, about 90:1, about 100:1, about 110:1, about 120:1, about 130:1, about 140:1, or about 150:1, more particularly is equal to or higher than about 8:1.

According to another more particular embodiment, optionally in combination with one or more features of the various embodiments described above or below, when the concentration of platinum in the leachate is equal to or higher than about 80 mg/Kg of leachate, more particularly is about 80, about 85, about 90, about 95, about 100, about 110, about 120, about 130, about 140, about 150, about 160, about 170, about 180, about 190, about 200, about 210, about 220, about 230, about 240, about 250, about 260, about 270, about 280, about 290, about 300, about 310, about 320, about 330, about 340, about 350, about 360, or about 370 mg/Kg; the weight ratio of palladium and platinum in the leachate is equal to or higher than about 1.1:1, about 1.2:1, about 1.3:1, about 1.4:1, about 1.5:1, about 1.6:1, about 1.7:1, about 1.8:1, about 1.9:1, about 2:1, about 2.1:1, about 2.2:1, about 2.3:1, about 2.4:1, about 2.5:1, about 2.6:1, about 2.7:1, about 2.8:1, about 2.9:1, about 3:1, about 4:1, about 5:1, about 6:1, about 7:1, about 8:1, about 9:1, about 10:1, about 15:1, about 20:1, about 25:1, about 30:1, about 40:1, about 50:1, about 60:1, about 70:1, about 80:1, about 90:1, about 100:1, about 110:1, about 120:1, about 130:1, about 140:1, or about 150:1 more particularly is equal to or higher than about 2:1.

When the weight ratio of palladium and platinum in the leachate obtained in the leaching step is equal to or higher than about 1.1:1 the reduction step may be carried out directly as detailed herein.

Alternatively, when the weight ratio of palladium and platinum in the leachate obtained in the leaching step is lower and particularly is equal to or lower than about 0.9:1, then the process of the invention further comprises a step of adding palladium in ionic form until the weight ratio of palladium and platinum in the leachate is equal to or higher than about 1.1:1.

According to one embodiment, optionally in combination with one or more features of the various embodiments described above or below, the process of the invention comprises step b) of adding palladium in ionic form to the leachate until such ratio is equal to or higher than about 1.1:1; more particularly the palladium in ionic form added to the leachate is a palladium salt, even more particularly a salt that is soluble in the leaching agent. Examples of palladium salts that may be used include, without limitation, PdCI2, $Pd(OAc)_2$, $Pd(NO_3)_2$, $Pd(SO_4)_2$, $Pd(NH_4)Cl_2$, $[Pd(NH_3)_4]Cl_2$, bis(acetylacetonate)palladium and the like.

The reducing step c) may be carried out by methods well-known in the art. In the case of using a deep eutectic solvent as a leaching agent there is no need to add a reducing agent, in particular when the DES is selected from the group consisting of choline chloride:oxalic acid; choline chloride:lactic acid, betaine:lactic acid, choline chloride:citric acid, choline chloride:lactic acid and citric acid, choline chloride:lactic acid and oxalic acid, choline chloride:malonic acid, choline chloride:malic acid, tetrabutylammonium chloride:lactic acid, tetrabutylammonium chloride:acetic acid, tetrabutylammonium chloride:oxalic acid, betaine:oxalic acid, choline chloride:ethylene glycol, choline chloride:glycerol, choline chloride:p-toluensulfonic acid, wherein betaine may optionally be in the form of hydrochloride salt. Otherwise, a reducing agent may be added.

In one embodiment, optionally in combination with one or more features of the various embodiments described above or below, the reducing step c) is carried out by heating the leachate at a temperature from 100 to 120 °C and for a period from 1 to 8 hours.

In general, platinum and palladium are recovered in form of a solid together with other PGMs that may be present in the initial material. Further separation and/or purification steps may be carried out. Thus, according to one embodiment, optionally in combination with one or more features of the various embodiments described above or below, the process of the invention further comprises steps d) isolating the platinum group metal (PGM) material comprising platinum in metallic form obtained in the previous step by separating them from the solvent, e.g. by using a conventional filtration system such as cartridge filter, filter press, centrifugation, etc, e) optionally washing the precipitate for example using $H_2O$, and f) optionally drying platinum group metal (PGM) material, e.g. by using an oven in order to remove the moisture of the solid. In general, the drying step can be performed at any temperature above room temperature; the lower the temperature the longer the time required

Additionally, the process may further comprise step g) separating the platinum from the platinum group metal (PGM) material.

As mentioned above, the process of the invention is capable to provide a platinum recovery efficiency of at

least 60% w/w. Thus, according to one particular embodiment, optionally in combination with one or more features of the various embodiments described above or below, the platinum recovery is deep eutectic solvent used in the process of the invention is capable of extracting at least about 60% w/w, about 70% w/w, about 80% w/w, about 85% w/w, about 90% w/w, about 95% w/w, or about 97% w/w.

The % of extraction as defined above, also referred herein to as efficiency or percentage of platinum recovered, can be determined by comparing: i) the content of one or more platinum group metals (PGMs) in the deep eutectic solvent that have been dissolved after contacting the starting product containing PGMs with the deep eutectic solvent (step a) for the specified time above, and ii) the content of the same PGMs in the starting solid product which is contacted with the DES in step a) of the process.

The contents i) and ii) above can be determined by using inductive coupled plasma optical emission spectroscopy (ICP-MS), which is a technique well-known in the art. The skilled person will know how to carry out the above measurements. For example, these measurements can be carried out in the conditions shown in the examples by using a ICP-MS spectrometer such as e.g. the equipment Agilent 7900 ICP/MS.

The % of extraction or efficiency of the process of the invention can be calculated by the following formula:

$$\text{Efficiency} = [(x*y)/1.000.000] / [(z*w)/1.000.000] *100$$

wherein x is the concentration (in ppm) of each PGM in the DES as measured by ICP-MS; y is the amount in g of the sample of DES used in the experiment; z is the concentration (in ppm) of each PGM in the starting solid as measured by ICP-MS; and w is the amount in g of the sample of the starting solid used for the experiment.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples are provided by way of illustration, and they are not intended to be limiting of the present invention. Furthermore, the present invention covers all possible combinations of particular and preferred embodiments described herein.

## Examples

### Inductive coupled plasma optical emission spectroscopy (ICP/MS)

The equipment used for the experiments below was Agilent 7900 ICP/MS. The mass used for each element was: 195Pt nm and 105Pd using 205Tl and 133Cs as internal standard. The measuring parameters were: replicate read time: 10s; Instrument stabilization delay 10s; Replicates: 5; Power 1.25kW; Plasma flow 15L/min; Auxiliary flow 1.5; Nebulizer pressure 190kPa/ Calibration parameters: curve type: linear, Correlation coefficient limit: 0.999, Maximum error: 10

| | | |
|---|---|---|
| Instrument | Agilent 7900 | |
| Nebulizer | Quartz concentric | |
| Spray chamber | quartz Scott double pass | |
| Plasma RF generator | Power | 1600W |
| | Frequency | 26 MHz |
| Ar flow rate | Plasma | 15 mL/min |
| | Auxiliary gas | 0.9 mL/min |
| | Nebulizer | 0.77 mL/min |
| Interface | Sampler cone | Platinum 1.2 mm |
| | Skimmer cone | Platinum |

(continued)

| Instrument | Agilent 7900 | |
|---|---|---|
| Data acquisition | Collision/helio cell mode | |
| | Sweeps/reading | 100 |
| | Replicate time | 200ms |
| | Number of replicates | 4 |

The used calibration standard was the following in a matrix of 5% HCl:

Table 1

| | S1 (Blank) | S2 | S3 | S4 | S5 | S6 | S7 | S8 |
|---|---|---|---|---|---|---|---|---|
| Pd (μg/L) | 0 | 1 | 5 | 20 | 100 | 500 | 2000 | 10000 |
| Pt (μg/L) | 0 | 1 | 5 | 20 | 100 | 500 | 2000 | 10000 |

The standards were prepared from: Pt standard solution for ICP Concentration 1000 mg/l (CPAchem); and Pd standard solution for ICP Concentration 1000 mg/L (CPAchem)

Verification standard (Maximum error: 10%)

Table 2

| | VS |
|---|---|
| Pt (μg/L) | 1 |
| Pd (μg/L) | 1 |

The standard used for the verification above was commercially available (Solution of 6 components: 100 mg/L each of Au, Ir, Pd, Pt, Rh, Ru CPAchem)

Determination of the content of Palladium and Platinum in a sample

1) In the starting material or in the precipitated solid after reduction Solid materials were dissolved by microwave assisted acid digestion using Milestone Ethos Up. In a first step, a representative sample of approximately 0.1 g was digested in 2 mL of concentrated nitric acid (65%), 6 mL hydrochloric acid (37%) and 2 mL hydrofluoric acid (48%) using microwave heating. Both sample and acid mixture were placed in inert PTFE sealed microwave vessels. The temperature profile was set to reach 230 ± 10 °C in 20 min. and to remain at 230 ± 10 °C for 15 min. After that, a second step adding 25 mL of 4 % boric acid was carried out in order to complex the HF excess. The temperature profile was set to reach 180 ± 10 °C in 20 min. and to remain at 180 ± 10 °C for 15 min. After cooling, the vessel content was diluted to 50 ml, and analysed by ICP-MS. The solutions were diluted with 5% HCl such that they were within the calibration range.

2) From a leachate solution
0.5 g of the solution was diluted to 25 mL with 5% HCl. Then was diluted with 5% HCl such that it was within the calibration range and subsequently analysed by ICP-MS.

General method for the preparation of DES

The adequate amounts of the hydrogen bond donor and hydrogen bond acceptor or acceptors were placed together in the same recipient and stirred magnetically at 80 °C for 2 hours. The original mixture of solids turned into a transparent and homogenous fluid which was the deep eutectic solvent.

Following the general method described above, the following DES was obtained: choline chloride/oxalic acid 1:1.5.

Example 1 - Procedure for PGMs recovery

Starting materials

The Pd and Pt containing starting materials were autocatalyst coming from spent light-duty and heavy-duty vehicles in powder form and having the particle size distribution and composition shown in the table 3 below:

Table 3

| Autocatalyst sample | Pd (ppm) | Pt (ppm) | grain size (mm) |
|---|---|---|---|
| 1 | 1457 | 833 | <2 |
| 2 | 766 | 2759 | <1 |
| 3 | 1658 | 28 | <1 |
| 4 | 1895 | 636 | <1 |

Step 1. PGMs leaching

The leaching of the Platinum Group Metals (PGM) contained in the different autocatalyst samples was carried out using a deep eutectic solvent (DES) prepared as described above formed by the mixture of choline chloride/oxalic acid (DES) in a molar ratio of 1:1.5. First of all, the DES was heated at 60 °C to facilitate its transference from the storage recipient to the leaching reactor. The DES/autocatalyst weight ratio in the reactor was 8:1. Next, 37%wt HCl was added to the DES in the reactor in an acid/autocatalyst weight ratio of 0.5:1. The resulting solution was stirred and heated up to 80 °C and then the autocatalyst powder was added to the DES in in the mentioned amount (DES/solid 8:1 weight ratio). Finally, 35%wt $H_2O_2$ was added slowly to the mixture until 0.75:1 hydrogen peroxide/autocatalyst weight ratio was reached. Once all the components were in the reactor, a temperature of 80 °C and sufficient stirring to maintain the powder in suspension were kept during 3 hours in order to complete the leaching step. After this time, the solution was filtrated at the same temperature to separate the undissolved solid from the leachate. The separated solid was washed with fresh (DES/HCl) leaching solution at 80 °C. Such washing solution was then added to the resulting leachate. The amount of PGMs leached out and the recovery efficiencies were quantified by means of inductively coupled plasma.

Step 2. Reduction of the PGMs in the leachate

After filtering the leachate, this was poured again into a reactor and the temperature of the solution was increased to 120 °C and hold for 4 hours. After this time, and before cooling down the solution, the solution was filtered. The obtained solid (reduced PGMs) was washed with water at room temperature obtaining a PGM concentrate of 80% of purity. The amount of PGMs precipitated and the purity of the solid were quantified by means of inductively coupled plasma.

Step 3. Purification of reduced PGMs (optional)

The obtained PGM concentrate was further washed with a dilute sulfuric solution (0.1-0.5 M) for at least 15 min, followed by a room temperature washing and finally dried. This last washing procedure allowed to obtain a concentrate containing approximately 95% metallic PGMs. The purity of the solid was quantified by means of inductively coupled plasma.

Results

Table 4 below shows for each sample the Pd and Pt concentration in the leachate after the leaching step (initial leachate); the Pd/Pt ratio in the leachate after the leaching step; the Pd and Pt concentration in the leachate after the reduction step (final leachate); and the recovered Pt after the reduction step.

The % of recovery or efficiency was calculated by the following formula:

$$\text{Efficiency}= [(x*y)/1.000.000] / [(z*w)/1.000.000] *100$$

wherein x is the concentration (in ppm) of each PGM in the DES as measured by ICP-MS; y is the amount in g of the

sample of DES used in the experiment; z is the concentration (in ppm) of each PGM in the starting solid as measured by ICP-MS; and w is the amount in g of the sample of the starting solid used for the experiment.

Table 4

| Sample | Autocat. sample | Initial conc. in the leachate | | Ratio Pd/Pt in the leachate | Pt Recovery after reduction (wt%) | Final conc.in the leachate |
|---|---|---|---|---|---|---|
| | | Pd (mg/Kg leachate) | Pt (mg/Kg leachate) | | | Pt (mg/Kg leachate) |
| **1** | 1 | 10 | 63 | 0.2 | 8 | 113 |
| **2** | 1 | 7 | 43 | 0.2 | 1 | 40 |
| **3** | 1 | 9 | 50 | 0.2 | 5 | 114 |
| **4** | 1 | 8 | 32 | 0.2 | 14 | 22 |
| **5** | 2 | 91 | 346 | 0.3 | 16 | 291 |
| **6** | 1* | 156 | 165 | 0.9 | 46 | 111 |
| **7** | 1 | 109.5 | 96.7 | 1.1 | 66.5 | 32.4 |
| **8** | 1 | 113.8 | 96 | 1.2 | 66.5 | 32.4 |
| **9** | 1 | 133.5 | 108 | 1.2 | 73.6 | 28.5 |
| **10** | 1 | 114.9 | 92.5 | 1.2 | 61.6 | 34.5 |
| **11** | 1 | 139.7 | 103.6 | 1.3 | 78.1 | 28.5 |
| **12** | 1 | 119.8 | 80.5 | 1.5 | 80.4 | 15.7 |
| **13** | 1 | 99.2 | 66.6 | 1.5 | 86.9 | 15.7 |
| **14** | 1 | 138.7 | 88.3 | 1.6 | 79.1 | 18.5 |
| **15** | 1 | 88 | 46 | 1.9 | 72 | 14 |
| **16** | 1 | 100 | 50 | 2.0 | 72 | 14 |
| **17** | 1 | 628 | 289 | 2.2 | 89 | 32 |
| **18** | 1 | 676 | 303 | 2.2 | 90 | 26 |
| **19** | 1 | 821 | 360 | 2.3 | 97 | 9 |
| **20** | 4 | 190 | 60 | 3.2 | 50 | 31 |
| **21** | 1 | 238 | 56 | 4.3 | 59 | 14 |
| **22** | 1** | 621 | 71 | 8.7 | 79 | 19 |
| **23** | 1* | 660 | 75 | 8.8 | 73 | 25 |
| **24** | 1 | 143 | 8 | 17.6 | 93 | 0.3 |
| **25** | 1 | 147 | 8 | 18.1 | 88 | 1 |
| **26** | 1 | 104 | 5 | 21.6 | 92 | 0.4 |
| **27** | 1 | 176 | 8 | 23.0 | 87 | 14 |
| **28** | 3 | 168 | 1.4 | 119.8 | 83 | 0.2 |
| **29** | 1** | 6689 | 78 | 85.8 | 82 | 15 |
| *In samples 6 and 23 the Pd in the leachate was adjusted by adding 1.0 and 9.4 mg, respectively, of $PdCl_2$ to the DES during the leaching of the autocatalyst powder sample.<br>** In samples 22 and 29 the amount of Pd in the starting material was adjusted by adding 37.1 and 442.7 mg, respectively, of metallic Pd to powder sample. | | | | | | |

Example 2 - Reuse of DES-based leachates for PGMs recovery in different cycles

Pt contained in the autocatalyst sample 1 shown in Table 3 was leached out under the conditions indicated above in step 1 of example 1. Once the remaining solid was separated and washed as indicated in step 1, a leachate was obtained (leachate of cycle 1). Fresh autocatalyst powder was then leached under the same conditions but using the leachate of cycle 1 instead of fresh DES to obtain a second leachate (leachate of cycle 2). The resulting leachate (leachate of cycle 2) was used to further leach out Pt form fresh autocatalyst powder instead of fresh DES to obtain a third leachate (leachate of cycle 3). The operation was repeated up to a total of 7 cycles.

Table 5 below shows the Pd and Pt concentration in the leachate obtained after each leaching cycle:

Table 5

| PGM | Autocatalyst (mg/Kg) | Leachate (mg/Kg) | | | | | | |
|---|---|---|---|---|---|---|---|---|
| | | Cycle 1 | Cycle 2 | Cycle 3 | Cycle 4 | Cycle 5 | Cycle 6 | Cycle 7 |
| Pd | 1457 | 144 | 281 | 399 | 462 | 573 | 628 | 676 |
| Pt | 833 | 71 | 131 | 178 | 199 | 238 | 289 | 303 |

As can be seen the results show that DES leachates (DES resulting after leaching the autocatalyst powder) can be used again to leach metals from fresh autocatalyst powders increasing the concentration of the metals in the DES. This way the concentration of Pt and Pd increase in each subsequent cycle. Furthermore, a reduction step was carried out with the leachate obtained in cycle 7 and the purity of the PGM concentrated solid was similar.

**Citation List**

- WO2008155464
- Smith E.L. et al, "Deep Eutectic Solvents (DESs) and Their Applications", Chem. Rev. 2014, 114, 11060-11082.


**Claims**

1. A process for the recovery of a platinum group metal (PGM) material comprising platinum, from a waste material which comprises a spent solid residue containing platinum and optionally palladium, wherein platinum and palladium are in metal, oxide or alloy form, which comprises the steps of:

    a) subjecting the waste material to a leaching step in the presence of a suitable leaching agent, an oxidizing agent and an acidic medium, whereby a leachate is obtained which comprises the platinum and optionally the palladium initially contained in the waste material in ionic form;
    b) when the weight ratio of palladium and platinum in the leachate obtained in the previous step is lower than about 1.1:1, adding palladium in ionic form to the leachate until such ratio is equal to or higher than about 1.1:1; and
    c) subjecting the leachate comprising platinum and palladium in a weight ratio equal to or higher than about 1.1:1 to a reducing step to precipitate a platinum group metal (PGM) material comprising platinum in metallic form from the leachate.

2. The process according to claim 1, wherein the leaching agent is selected from inorganic acids, organic acids, inorganic bases, organic bases, metal salts, halogens, cyanides, and deep eutectic solvents.

3. The process according to claim 2, wherein the suitable leaching agent is a deep eutectic solvent.

4. The process according to claim 3, wherein the deep eutectic solvent consists of a mixture of:

    (i) a hydrogen bond acceptor (HBA) compound (A) selected from

        a) a salt of the formula $Cat^+X^-$ (I), wherein $Cat^+$ is a cation selected from the group consisting of any ammonium, imidazolium, and phosphonium, and $X^-$ is a Lewis base;

b) betaine or a salt thereof; and
c) carnitine or a salt thereof; and

(ii) a hydrogen bond donor compound (B) selected from ($C_1$-$C_{12}$)alcohol, ($C_1$-$C_{12}$)aldehyde, ($C_1$-$C_{18}$)carboxylic acid, ($C_1$-$C_6$)urea, ($C_1$-$C_{12}$)amide, ($C_1$-$C_{12}$)nitrogenated compound, ($C_1$-$C_{12}$)aminoacid and ($C_1$-$C_{12}$)sugar;

in a molar ratio of (A) to (B) from 1:10 to 10:1.

**5.** The process according to any of claims 1 to 4, wherein the weight ratio of the leaching agent and the waste material is from 3:1 to 50:1.

**6.** The process according to any of claims 3 to 5, wherein the oxidizing agent is selected from the group consisting of hydrogen peroxide, $NaNO_3$, $I_2$, $KHSO_5$, Fenton's reagent, and mixtures thereof.

**7.** The process according to any of claims 3 to 6, wherein the acidic medium is obtained by the addition of an acid selected from the group consisting of sulfuric acid, hydrochloric acid, nitric acid, and mixtures thereof.

**8.** The process according to any of claims 3 to 7, wherein the leaching step is carried out at a temperature from 40 to 130 °C and for a period from 0.25 to 6 hours.

**9.** The process according to any of claims 1 to 8, wherein the leachate used in step c) comprises platinum and palladium in a weight ratio equal to or higher than about 2:1.

**10.** The process according to any of claims 1 to 8, wherein:

i) the concentration of platinum in the leachate used in step c) is lower than about 40 mg/Kg of leachate, and the weight ratio of palladium and platinum is equal to or higher than about 2:1; or alternatively
ii) the concentration of platinum in the leachate used in step c) is equal to or higher than about 40 mg/Kg and lower than about 80 mg/Kg of leachate, and the weight ratio of palladium and platinum is equal to or higher than about 1.8:1; or alternatively
iii) the concentration of platinum in the leachate used in step c) is equal to or higher than about 80 mg/Kg of leachate, and the weight ratio of palladium and platinum is equal to or higher than about 1.1:1.

**11.** The process according to any of claims 1 to 10, wherein the reducing step c) is carried out by heating the leachate at a temperature from 100 to 120 °C and for a period from 1 to 8 hours.

**12.** The process according to any of claims 1 to 11, further comprising steps d) isolating the platinum group metal (PGM) material comprising platinum in metallic form obtained in the previous step by separating it from the solvent, e) optionally washing the material with water, and f) optionally drying the material obtained in the previous step.

**13.** The process according to any of claims 1 to 12, wherein the material further comprises palladium in metal, oxide or alloy form.

**14.** The process according to any of claims 1 to 13, wherein the spent solid residue is selected from the group consisting of a spent autocatalyst, a spent petroleum refining catalyst, a spent Proton Exchange Membrane fuel cell (PEMFC), and a spent catalyst used in the chemical industry.

**15.** Use of palladium for the recovery of platinum from a leachate which comprises platinum and palladium in a weight ratio equal to or higher than about 1.1:1.

Europäisches Patentamt
European Patent Office
Office européen des brevets

# EUROPEAN SEARCH REPORT

Application Number
EP 22 38 2410

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WIECKA ZUZANNA ET AL: "Recovery of platinum group metals from spent automotive converters by leaching with organic and inorganic acids and extraction with quaternary phosphonium salts", SEPARATION AND PURIFICATION TECHNOLOGY, ELSEVIER SCIENCE, AMSTERDAM, NL, vol. 280, 15 October 2021 (2021-10-15), XP086859715, ISSN: 1383-5866, DOI: 10.1016/J.SEPPUR.2021.119933 [retrieved on 2021-10-15] * figure 6 * * "3.2 Leaching of PGM from spent automotive converters"; page 6 - page 7 * * "2.3.1 Leaching procedure"; page 3 * ----- | 1-15 | INV. C22B3/10 C22B3/44 C22B7/00 C22B11/00 |
| A | EP 3 375 895 A1 (FUNDACION TECNALIA RES & INNOVATION [ES]) 19 September 2018 (2018-09-19) * claim 1 * ----- | 1-15 | TECHNICAL FIELDS SEARCHED (IPC) C22B |
| A | MANIS KUMAR JHA ET AL: "Hydrometallurgical recovery/recycling of platinum by the leaching of spent catalysts: A review", HYDROMETALLURGY., vol. 133, 1 February 2013 (2013-02-01), pages 23-32, XP055296220, NL ISSN: 0304-386X, DOI: 10.1016/j.hydromet.2012.11.012 * the whole document * ----- | 1-15 | |

The present search report has been drawn up for all claims

1

| Place of search | Date of completion of the search | Examiner |
|---|---|---|
| The Hague | 5 October 2022 | Martinez Miró, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 38 2410

This annex lists the patent family members relating to the patent documents cited in the above-mentioned European search report. The members are as contained in the European Patent Office EDP file on
The European Patent Office is in no way liable for these particulars which are merely given for the purpose of information.

05-10-2022

| Patent document cited in search report | Publication date | Patent family member(s) | Publication date |
|---|---|---|---|
| EP 3375895 A1 | 19-09-2018 | CN 110392742 A | 29-10-2019 |
| | | EP 3375895 A1 | 19-09-2018 |
| | | EP 3596241 A1 | 22-01-2020 |
| | | ES 2870232 T3 | 26-10-2021 |
| | | WO 2018167130 A1 | 20-09-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008155464 A


### Non-patent literature cited in the description


- **SMITH E.L. et al.** Deep Eutectic Solvents (DESs) and Their Applications. *Chem. Rev.,* 2014, vol. 114, 11060-11082